# EUROPEAN PATENT APPLICATION

(11) **EP 3 860 074 A1**
(43) Date of publication of application: **04.08.2021**
(21) Application number: 19883373.3
(22) Date of filing: 27.06.2019
(51) Int. Cl.: H04L 29/06

(54) **COMMUNICATION METHOD, CLIENT DEVICE, AND SERVER DEVICE**

(30) Priority: 16.11.2018 CN 201811367224
(71) Applicant: Huawei Technologies Co., Ltd., Shenzhen Guangdong 518129 (CN)
(72) Inventor: WANG, Jianping, Shenzhen, Guangdong 518129 (CN); JIN, Chunrong, Shenzhen, Guangdong 518129 (CN)
(74) Representative: Grünecker Patent- und Rechtsanwälte PartG mbB
(86) International application number: PCT/CN2019/093164
(87) International publication number: WO 2020/098284

(57) **Abstract**

Embodiments of this application disclose a communication method, a client device, and a server device, to reduce a risk that a client incorrectly considers that a session is interrupted and stops receiving a reply packet corresponding to a request packet. The method includes: generating, by a client device, a request packet and sending the request packet to a server device, where the request packet is used to indicate the server device to operate data of a data model; generating, by the client device, a status query packet based on the request packet, where the status query packet includes status query information, and the status query information is used to request the server device to obtain a processing status in which the server device processes the request packet; sending, by the client device, the status query packet to the server device; and receiving, by the client device, a first packet that is sent by the server device based on the status query packet, where the first packet includes the processing status of the request packet.

## Description

This application claims priority to Chinese Patent Application No. 201811367224.0, filed with the China National Intellectual Property Administration on November 16, 2018 and entitled "COMMUNICATION METHOD, CLIENT DEVICE, AND SERVER DEVICE", which is incorporated herein by reference in its entirety.

### TECHNICAL FIELD

This application relates to the field of network communications, and in particular, to a communication method, a client device, and a server device.

### BACKGROUND

A network device management system is a system for managing a network device. A network device management protocol such as the Restconf protocol runs in the network device management system. The Restconf protocol is a protocol that allows a web application to access, in a modular and extensible manner, configuration data, operation data, a data model defined protocol operation, and a notification event that are on a network device. The Restconf protocol runs over the hypertext transfer protocol (hypertext transfer protocol, HTTP), and may be used to access a data model defined by using a Yang (yet another next generation) modeling language and data defined by using the network configuration (network configuration, NETCONF) protocol.

At a software level, the network device management system includes a client (client) and a server (server). After a session is established between the client and the server, the client sends a request (request) packet to the server, to request to create, delete, modify, or query data of one or more network devices. The server is configured to receive and parse the request packet of the client, perform corresponding processing on data of the network device, and return a reply (reply) packet to the client.

In some cases, for example, a request packet includes a relatively large quantity of processing instructions, the server needs to take a relatively long time to process the request packet from the client; and therefore, the client also needs to take a relatively long time to wait for a reply packet that is returned by the server and that corresponds to the request packet. Consequently, the client incorrectly considers that a current session is interrupted and stops receiving the reply packet, resulting in a service loss.

### SUMMARY

Embodiments of this application provide a communication method, a client device, and a server device, to reduce a risk that a client incorrectly considers that a session is interrupted and stops receiving a reply packet corresponding to a request packet.

According to a first aspect, an embodiment of this application provides a communication method. The method may be applied to a client device. The method specifically includes the following steps: First, the client device generates a request packet and sends the request packet to a server device, where the request packet is used to indicate the server device to operate data of a data model. The request packet may be a request packet based on the Restconf protocol, such as a get (GET) packet, a post (POST) packet, an update (PUT) packet, a patch (PATCH) packet, or a delete (DELETE) packet. This is not specifically limited in this application. Then, the client device generates a status query packet based on the request packet, where the status query packet includes status query information, and the status query information is used to request the server device to obtain a processing status in which the server device processes the request packet. The status query information may be a session identifier corresponding to the request packet or a name of the data model that is included in the request packet. The status query information may be represented in a form of a status query field, and a value of the status query field may be the session identifier or the name of the data model. The client device sends the status query packet to the server device. Finally, the client device receives a first packet that is sent by the server device based on the status query packet, where the first packet may be a reply packet or a notification packet. Because the first packet includes the processing status of the request packet, the client device can obtain the processing status of the request packet in time, thereby reducing a risk that the client incorrectly considers that a session is interrupted and stops receiving a reply packet corresponding to the request packet.

Optionally, the request packet includes a session identifier, and the session identifier is an identifier of a session established by the client device with the server device to send the request packet; and the status query information includes the session identifier. When detecting that the request packet includes the session identifier, the client device triggers the step of generating the status query packet. If the status query information further includes the status query field, when detecting the status query field and the value of the status query field, namely, the session identifier, that are included in the request packet, the client triggers the step of generating the status query packet. Because the session identifier is in a one-to-one correspondence with the request packet, in this embodiment of this application, the status query information including the session identifier aims to allow the server device to learn of a request packet whose processing status needs to be obtained.

Optionally, the request packet includes the name of the data model, and the status query information includes the name of the data model. The name of the data model can be used to distinguish request packets to some extent. Therefore, the status query information including the name of the data model aims to allow the server device to learn of a request packet whose processing status needs to be obtained.

Optionally, when the client device sends the request packet to the server device, the method further includes: starting a timer. That the client device receives the first packet that is sent by the server device based on the status query packet includes: Before the timer expires, the client device receives the first packet that is sent by the server device based on the status query packet. To be specific, when the client device incorrectly considers that the session is interrupted once the timer expires, the client device receives the first packet before the timer expires in this embodiment of this application, to prevent the client from incorrectly considering that the session is interrupted because of an excessively long processing time of the request packet. After receiving the first packet, the client device may pause the timer for timing, and wait for the reply packet corresponding to the request packet. Alternatively, the client may restart the timer.

Optionally, the status query packet is a subscribe packet or an extended get packet, and the extended get packet is a get packet that carries the status query information.

Optionally, a uniform resource identifier (uniform resource identifier, URI) of the status query packet includes the status query information.

To allow the client to learn of the processing status of the request packet in time, optionally, that the client device sends the status query packet to the server device includes: The client device periodically sends the status query packet to the server device. Each time the server device receives a status query packet, the server device performs the step of obtaining the processing status of the request packet and sending the first packet to the client device.

According to a second aspect, an embodiment of this application further provides a communication method, applied to a server device. The method specifically includes the following steps: First, the server device obtains a request packet sent by a client device, and processes the request packet, where the request packet is used to indicate the server device to operate data of a data model. The request packet may be a request packet based on the Restconf protocol. The server device receives a status query packet sent by the client device, where the status query packet includes status query information, and the status query information is used to request the server device to obtain a processing status in which the server device processes the request packet. The status query information may be a session identifier corresponding to the request packet or a name of the data model that is included in the request packet. The status query information may be represented in a form of a status query field, and a value of the status query field may be the session identifier or the name of the data model. The server device obtains, based on the status query information, the processing status of the request packet, and sends a first packet to the client device, where the first packet includes the processing status of the request packet. The first packet may be a reply packet or a notification packet. In this embodiment of this application, during processing of the request packet, if obtaining the status query packet, the server device may obtain the processing status of the request packet based on the status query information in the status query packet, and notify the client of the processing status of the request packet by sending the first packet to the client device, thereby reducing a risk that the client device incorrectly considers that a session is interrupted because the client device waits for a reply packet corresponding to the request packet for an excessively long time.

Optionally, the status query information includes a session identifier, and the session identifier is an identifier of a session established by the client device with the server device to send the request packet. That the server device obtains, based on the status query information, the processing status of the request packet includes: The server device obtains, based on the session identifier included in the status query information, the processing status of the request packet corresponding to the session identifier. Because the session identifier is in a one-to-one correspondence with the request packet, and the request packet may also carry the session identifier, the server device may determine the corresponding request packet based on the session identifier in the status query information, and obtain the processing status of the corresponding request packet.

Optionally, the status query information includes the name of the data model. That the server device obtains, based on the status query information, the processing status of the request packet includes: The server device obtains the processing status of the request packet including the name of the data model. Because the request packet includes the name of the data model, the server device may determine the corresponding request packet based on the name of the data model in the status query packet, and obtain the processing status of the corresponding request packet

Optionally, the status query packet is a subscribe packet or an extended get packet, and the extended get packet is a get packet that carries the status query information.

Optionally, a uniform resource identifier of the status query packet includes the status query information.

To allow the client device to obtain the processing status of the request packet in time, optionally, that the server device sends the first packet to the client device includes: The server device periodically sends the first packet to the client device.

According to a third aspect, an embodiment of this application further provides a client device, including: a memory, and a processor connected to the memory. The processor is configured to execute a computer-readable instruction in the memory, so that the client device performs the following operations: generating a request packet and sending the request packet to a server device, where the request packet is used to indicate the server device to operate data of a data model; generating a status query packet based on the request packet, where the status query packet includes status query information, and the status query information is used to request the server device to obtain a processing status in which the server device processes the request packet; sending the status query packet to the server device; and receiving a first packet that is sent by the server device based on the status query packet, where the first packet includes the processing status of the request packet.

Optionally, the request packet includes a session identifier, and the session identifier is an identifier of a session established by the processor with the server device to send the request packet; and the status query information includes the session identifier.

Optionally, the request packet includes a name of the data model, and the status query information includes the name of the data model.

Optionally, when sending the request packet to the server device, the processor is further configured to execute the computer-readable instruction in the memory, so that the client device performs the following operation: starting a timer; and
that the processor receives the first packet that is sent by the server device based on the status query packet includes: before the timer expires, receiving the first packet that is sent by the server device based on the status query packet.

Optionally, the first packet is a reply packet or a notification packet.

Optionally, the status query packet is a subscribe packet or an extended get packet, and the extended get packet is a get packet that carries the status query information.

Optionally, a uniform resource identifier of the status query packet includes the status query information.

Optionally, that the processor sends the status query packet to the server device includes: periodically sending the status query packet to the server device.

Optionally, the request packet is a request packet based on the Restconf protocol.

According to a fourth aspect, an embodiment of this application further provides a server device, including: a memory, and a processor connected to the memory. The processor is configured to execute a computer-readable instruction in the memory, so that the client device performs the following operations: obtaining a request packet sent by a client device, and processing the request packet, where the request packet is used to indicate the server device to operate data of a data model; receiving a status query packet sent by the client device, where the status query packet includes status query information, and the status query information is used to request the processor to obtain a processing status in which the processor processes the request packet; obtaining, based on the status query information, the processing status of the request packet; and sending a first packet to the client device, where the first packet includes the processing status of the request packet.

Optionally, the status query information includes a session identifier, and the session identifier is an identifier of a session established by the processor with the server device to send the request packet; and
that the processor obtains, based on the status query information, the processing status of the request packet includes: obtaining, based on the session identifier included in the status query information, the processing status of the request packet corresponding to the session identifier.

Optionally, the status query information includes a name of the data model; and
that the processor obtains, based on the status query information, the processing status of the request packet includes: obtaining the processing status of the request packet including the name of the data model.

Optionally, the first packet includes a reply packet or a notification packet.

Optionally, the status query packet is a subscribe packet or an extended get packet, and the extended get packet is a get packet that carries the status query information.

Optionally, a uniform resource identifier of the status query packet includes the status query information.

Optionally, that the processor sends the first packet to the client device includes: periodically sending the first packet to the client device.

Optionally, the request packet is a request packet based on the Restconf protocol.

### BRIEF DESCRIPTION OF DRAWINGS

FIG. 1 is a structural block diagram of a communications system according to an embodiment of this application;
FIG. 2 is a flowchart of a communication method according to an embodiment of this application;
FIG. 3 is a schematic diagram of a format of a request packet according to an embodiment of this application;
FIG. 4 is a schematic diagram of a format of a reply packet according to an embodiment of this application;
FIG. 5 is a structural block diagram of a communications apparatus according to an embodiment of this application;
FIG. 6 is a structural block diagram of a communications apparatus according to an embodiment of this application;
FIG. 7 is a schematic structural diagram of a client device according to an embodiment of this application; and
FIG. 8 is a schematic structural diagram of a server device according to an embodiment of this application.

### DESCRIPTION OF EMBODIMENTS

Embodiments of this application provide a communications system, a method, and an apparatus, to reduce a risk that a client incorrectly considers that a session is interrupted and stops receiving a reply packet corresponding to a request packet, thereby reducing a service loss.

The technical solutions provided in the embodiments of this application are described below by using an application scenario as an example.

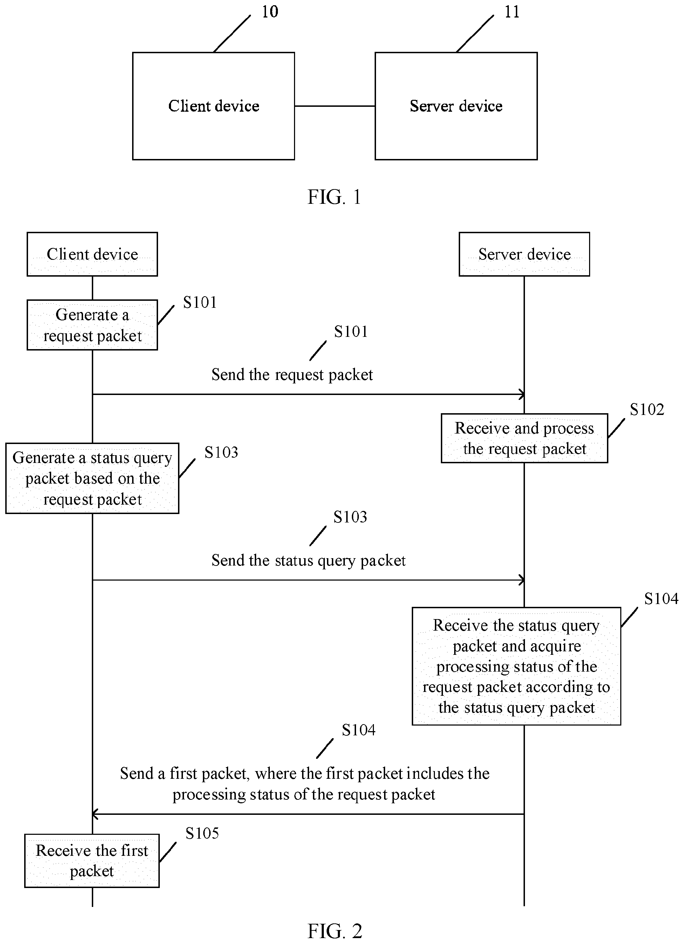

FIG. 1 is a structural block diagram of a communications system according to an embodiment of this application.

The communications system provided in this embodiment of this application may include a client device 10 and a server device 11. The client device 10 is connected to the server device 11.

The client device 10 is a device in which a client supporting the Restconf protocol is deployed, and may be, for example, a mobile phone, or a personal computer (personal computer, PC) such as a tablet personal computer (tablet personal computer, Tablet PC), a notebook computer, a super mobile personal computer, a personal digital assistant, or another terminal. The server device 11 is a device in which a server supporting the Restconf protocol is deployed, and may be, for example, a router, a switch, or a server. The service is, for example, an enterprise server, an operator server, or a service provider server.

In this embodiment of this application, the client device 10 and the server device 11 interact with each other to implement the interaction between the client and the server.

The client in the client device 10 is configured to generate a request packet and send the request packet to the server device 11. The request packet is used to asynchronously create, delete, modify, and/or query data of one or more network devices. The network device may be an internet protocol (internet protocol, IP) network device, a wavelength division multiplexing (wavelength division multiplexing, WDM) network device, an optical transport network (optical transport network, OTN) network device, or the like. This is not specifically limited in this embodiment of this application.

After receiving the request packet, the server in the server device 11 processes the request packet, to asynchronously create, delete, modify, and/or query the data of the network devices.

Asynchronous processing of the data of the network device means that the server operates data of a data model of the server based on the request packet. The data model is used to describe manageable data in the network device. The data model may be, for example, a Yang model, where the Yang data model is a model constructed by using a Yang language model. Operations for the data of the data model include creating, deleting, modifying, and/or querying the data of the data model. After performing a data operation corresponding to the data model, the server in the server device 11 sends a processing result of the operation to the client device in a form of a reply packet, to feed back whether the request packet is successfully processed. Therefore, the server can send the data of the network device before completing the processing. Then, the server correspondingly processes the data of the network device based on the operation on the data of the data model.

In this embodiment of this application, the client in the client device 10 generates a status query packet based on the request packet and sends the status query packet to the server device 11, where the status query packet includes status query information, and the status query information is used to request the server device 11 to obtain a processing status in which the server processes the request packet. After obtaining the status query packet, the server in the server device 11 obtains the processing status of the request packet based on the status query information, and sends a first packet to the client device 10, where the first packet includes the processing status of the request packet, so that the client in the client device 10 can learn of the processing status of the request packet, thereby reducing a risk that the client incorrectly considers that a session is interrupted and stops receiving the reply packet corresponding to the request packet.

FIG. 2 is a flowchart of a communication method according to an embodiment of this application;

The communication method provided in this embodiment of this application specifically includes the following steps:
S101: A client device generates a request packet and sends the request packet to a server device.

In this embodiment of this application, the client device may generate the request packet and send the request packet to the server device. The request packet may be a request packet based on the Restconf protocol. The request packet may be, for example, a get (GET) packet, a post (POST) packet, an update (PUT) packet, a patch (PATCH) packet, or a delete (DELETE) packet. This is not specifically limited in this application.

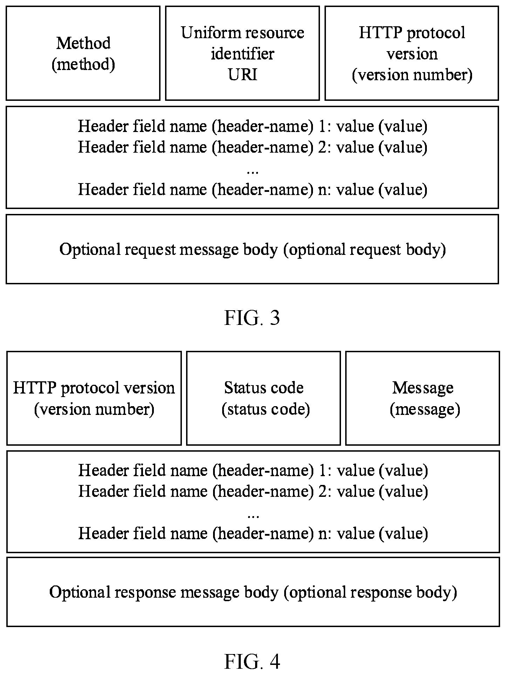

For example, FIG. 3 is a schematic diagram of a format of the request packet. In the figure, the request packet may include an operation method (method), a URI, an HTTP protocol version (version number), a header field name (header-name), an optional request message body (optional request body), and the like.

The operation method defines an operation type of an operation performed on data of a data model of the server device, where the operation type includes, for example, GET, POST, PUT, PATCH, or DELETE. The data model, such as a Yang data model, of the server device uses a data modeling language to represent manageable data in the network device. The data model of the server device may be stored in a data model library.

The URI includes a name of the data model, and is used to indicate the server device to operate the data of the data model corresponding to the name. For example, the URI may be Http://0.0.0.0:80/restconf/data/huawei-aaa:aaa. 0.0.0.0 indicates an IP address of a server, 80 indicates a port number of the server, restconf/data indicates requested restconf protocol data, and huawei-aaa:aaa indicates the model name.

S102: The server device obtains the request packet sent by the client device, and processes the request packet.

As mentioned above, the URI of the request packet may include the name of the data model. The server device may process the data of the corresponding data model based on the name of the data model in the URI. Assuming that the request packet is a GET packet, the server device finds the corresponding data model based on the name of the data model in the URI of the GET packet, obtains the data of the data model, and sends the data to the client device. Assuming that the request packet is a POST packet, the request packet includes not only the name of the data model but also data corresponding to the name of the data model. The server device stores, in a form of the data model, the data that corresponds to the name of the data model and that is carried in the POST packet, and names the data model after the name of the data model that is carried in the POST packet.

After operating the data corresponding to the name of the data model, that is, after processing the request packet, the server device may send a reply packet corresponding to the request packet to the client device.

S103: The client device generates a status query packet based on the request packet, and sends the status query packet to the server device.

In this embodiment of this application, the status query packet includes status query information, and the status query information is used to request the server device to obtain a processing status in which the server device processes the request packet.

The status query information may be represented in a form of a status query field, such as a "process" field.

To allow the server device to learn of a received request packet whose processing status needs to be obtained, the status query information may include a session identifier of the request packet and/or the name of the data model that is included in the request packet. The session identifier is an identifier of a session established by the client device with the server device to send the request packet. Usually, the client device and the server device establish a short connection, and the client device sends one request packet to the server device each time the client device and the server device establish a session. Different sessions correspond to different session identifiers. Therefore, request packets may be distinguished by using session identifiers.

When different request packets include different names of the data model, the names of the data model in the request packets may also be used to distinguish the request packets.

Optionally, the session identifier and/or the name of the data model may be used as a value of the status query field. For example, in "process=3", "3" indicates the session identifier of the request packet. In "process=huawei-aaa:aaa", "huawei-aaa:aaa" indicates the name of the data model in the request packet.

In this embodiment of this application, the status query packet may have a plurality of representation forms.

In a possible implementation, the status query packet may be an extended get (GET) packet. The extended GET packet is a GET packet to which the status query information is added, and is used to obtain the processing status of the request packet, which is different from a common GET packet. The extended GET packet may include the status query information, and the status query information may be carried in the URI of the extended GET packet. For example, the URI in the extended GET packet may be http://0.0.0.0:80/restconf/data/process=3. In "process=3", "process" is the status query field, and "3" is the value of the status query field, such as the session identifier. To be specific, in this example, in the URI of the extended GET packet, the data (data) directly carries the status query field and the value of the status query field, and such a special format indicates that the GET packet is an extended GET packet. Certainly, it may be understood that this format does not constitute a limitation on this application.

In another possible implementation, the status query packet may be a subscribe (subscribe) packet. The subscribe packet is used to initiate subscription to an event notification. After subscription, the server device sends a notification to an initiator of the subscribe packet. For specific descriptions, refer to section 2.1.1 in the RFC5277 protocol. In this embodiment of this application, the subscribe packet is used to indicate to subscribe to a new event stream (event stream) on a server, where the new event stream is used to obtain the processing status of the request packet, and send the processing status of the first packet to the client in a form of a notification. The event stream may also be referred to as an event stream resource (event stream resource), and is used to represent a resource of an event notification generated by a system. For specific descriptions, refer to section 3.8 in the RFC8040 protocol, and details are not described herein.

The subscribe packet is also a type of request packet. Therefore, for a format of the subscribe packet, refer to FIG. 3, and details are not described herein again. The status query information may be carried in a URI of the subscribe packet. For example, the URI of the subscribe packet may be http://0.0.0.0:80/restconf/streams/process=3. "Streams" indicates an event stream, and "restconf/streams" indicates a requested restconf protocol event stream. In "process=3", "process" is the status query field, and "3" is the value of the status query field, such as the session identifier.

In actual application of this application, the client device is triggered to generate the status query packet after the request packet is generated.

In a possible implementation, each time the client device detects that a request packet is generated, the client device generates a status query packet for the request packet.

In another possible implementation, when generating the request packet, the client device may include the status query information in the request packet. When detecting that the request packet carries the status query information, the client device learns that the status query packet needs to be generated for the request packet.

For example, the status query field is added to the request packet, and the status query field may be, for example, the "process" field or another user-defined field. This is not limited in this application. The value of the status query field may be the session identifier of the request packet.

The status query field and the value of the status query field may be carried in the URI of the request packet. For example, the URI of the request packet may be http://0.0.0.0:80/restconf/data/huawei-aaa:aaa?process=3. In "process=3", "process" is the status query field, and "3" is the value of the status query field, such as the session identifier.

In addition, it should be noted that the client device may perform S103 after performing S101. Therefore, S103 does not need to be performed after S102 is performed.

S104: The server device receives the status query packet, obtains, based on the status query packet, the processing status of the request packet, and sends a first packet to the client device, where the first packet includes the processing status of the request packet.

The server device needs to identify types of packets received by the server device, to determine a specific received packet. In this embodiment of this application, a format of the status query packet may be a specific format. For example, if the server device receives a GET packet, and in a URI of the GET packet, "process" is directly connected after "data", or "process" is directly connected after "streams", it is considered that the GET packet is an extended GET packet or a subscribe packet, namely, a status query packet.

In addition, in this embodiment of this application, if the status query packet is the extended GET packet, the server device needs to predefine a corresponding capability set (capability), to obtain the processing status of the request packet and send the processing status of the request packet to the client device. The capability set is an optional RESTCONF protocol feature and is presented by the server device that supports the feature. For related content of the capability set, refer to section 9.3 in the RFC8040 protocol, and details are not described herein.

Each capability set is identified by a URI. For the capability set that supports obtaining of the processing status of the request packet and sending the processing status of the request packet to the client device, a URI corresponding to the capability set may be, for example, <capability>http://www.huawei.com/restconf/capability/process</capability>. In the URI, "www.huawei.com" indicates a capability set defined by Huawei. "restconf/capability" indicates a capability set in the restconf protocol. "process" indicates a status query capability set.

When the server device finds, based on the URI carried in the extended GET packet, a capability set that is stored in the server device and that supports obtaining of the processing status of the request packet, the server device may perform the step of obtaining the processing status of the request packet. Specifically, the server device may determine whether there is a capability set including the status query field of the extended GET packet in a stored capability set, and if yes, it is considered that the server device has the capability set that supports obtaining of the processing status of the request packet. For example, assuming that the status query field is "process", if there is, in the server device, a capability set in which a URI includes "process", it is considered that the capability set is the capability set that supports obtaining of the processing status of the request packet.

If the status query packet is a subscribe packet, the server device needs to subscribe, based on the subscribe packet, to an event stream related to a status obtaining event, to obtain the processing status of the request packet and send the processing status of the request packet to the client device. The status obtaining event is an event of obtaining the processing status of the request packet. The event stream that is subscribed to can be stored in a form of a Yang file. The event stream that is related to the status query event and that is subscribed to may include the status query information, such as the session identifier or the name of the data model. After obtaining the status query packet, the server device may determine, based on the status query information, whether the corresponding event stream has been subscribed to, and if yes, perform a subsequent step of obtaining the processing status of the request packet.

After obtaining the processing status of the request packet, the server device may send the processing status of the request packet to the client device, where the processing status of the request packet is carried in the first packet. In addition to the processing status of the request packet, the first packet may carry the status query information such as the session identifier of the request packet and/or the name of the data model in the request packet. Therefore, the client can learn of a request packet to which the processing status in the first packet belongs.

The first packet may be a reply packet corresponding to the status query packet or a notification packet.

Specifically, if the status query packet is the extended GET packet, the first packet may be a reply packet corresponding to the extended GET packet.

FIG. 4 is a schematic diagram of a format of the reply packet. In this figure, the reply packet includes an HTTP protocol version (version number), a status code (status code), a message (message), a header field name (header-name), an optional response message body (optional response body), and the like. The processing status of the request packet may be carried in the optional response message body of the reply packet.

If the status query packet is a subscribe packet, the first packet may be a notification (notification) packet.

In addition, to allow the client device to learn of the processing status of the request packet in time, in actual application, after receiving the status query packet, the server device may periodically obtain the processing status of the request packet, and send the first packet to the client device. Alternatively, the client device may periodically send the status query packet to the server device. Each time the server device receives a status query packet, the server device performs the step of obtaining the processing status of the request packet and sending the first packet to the client device.

In actual application, the processing status of the request packet may be information indicating a status, for example, being processed or processing stopped, or may be information about a processing progress of the request packet, for example, a percentage of processed information in all information.

For example, if the request packet is being processed, "active" may be used to indicate the state. If an error occurs when the request packet is processed, the processing is stopped, and "inactive" may be used to indicate the state. For example, the processing progress of the request packet may be "50%", indicating that 50% of information in the request packet has been processed, and remaining 50% of information has not been processed.

S105: The client device receives the first packet that is sent by the server device based on the status query packet.

To allow the client device to obtain the processing status of the request packet in time and prevent the client from incorrectly considering that the session is interrupted, it needs to be ensured that the client device receives the first packet within a specified response time of the reply packet corresponding to the request packet. Therefore, if a timer is set on the client device, the timer is started when the client device sends the request packet. Before the timer expires, the client device receives the first packet.

To ensure that the client device receives the first packet before the timer expires, the client device needs to send a status obtaining packet to the server device before the timer expires. After receiving the first packet, the client device may pause the timer for timing, or restart the timer.

For example, it is assumed that the timer performs timing for 1 minute. In this case, when the client device sends the request packet to the server device, the timer is started, and the timer starts timing from 0. Then, the client device may send the status query packet to the server device when the timer counts to the 15^{th} second. Then, the client device receives, when the timer counts to the 25^{th} second, the first packet sent by the server device, where the processing status of the request packet carried in the first packet indicates that the request packet is being processed. In this case, the client device may pause timing and wait for the reply packet corresponding to the request packet. Alternatively, the client device restarts the timer, that is, the timer restarts timing from 0. In the latter case, the server device needs to periodically obtain the processing status of the request packet and send the processing status of the request packet to the client device. For example, the server device obtains and sends the processing status of the request packet every 10 seconds. The client device may also periodically send the status query packet to the server device. For example, the client device sends the status query packet every 10 seconds, and each time the server device receives the status query packet, the server device obtains the processing status of the request packet and sends the processing status to the client device, until the client device receives the reply packet corresponding to the request packet and sent by the server device. In this embodiment of this application, the client device generates, based on the request packet, the status query packet that carries the status query information, and sends the status query packet to the server device, so that after receiving the status query packet, the server device may obtain the processing status of the request packet, and send the first packet that carries the processing status of the request packet to the client device, so that the client device can obtain the processing status of the request packet in time, thereby avoiding a problem that the client device no longer receives the reply packet corresponding to the request packet because the server device does not return the reply packet corresponding to the request packet for a long time and incorrectly considers that the session is interrupted.

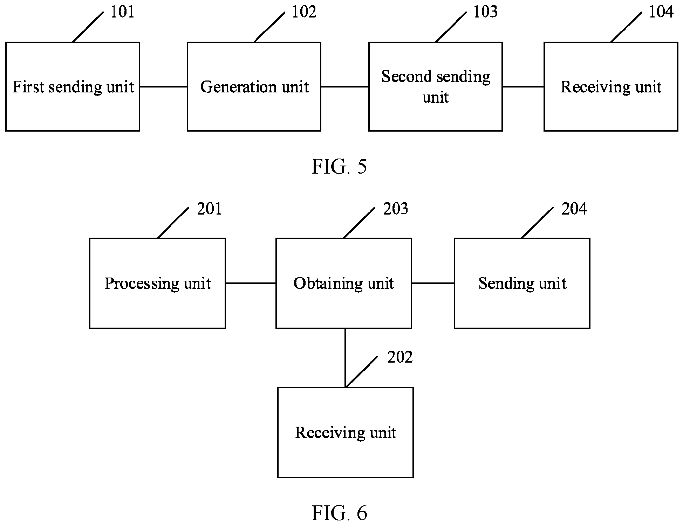

FIG. 5 is a structural block diagram of a communications apparatus according to an embodiment of this application.

The communications apparatus provided in this embodiment of this application is applied to a client device, and specifically includes:
a first sending unit 101, configured to generate a request packet and send the request packet to a server device, where the request packet is used to indicate the server device to operate data of a data model;
a generation unit 102, configured to generate a status query packet based on the request packet, where the status query packet includes status query information, and the status query information is used to request the server device to obtain a processing status in which the server device processes the request packet;
a second sending unit 103, configured to send the status query packet to the server device; and
a receiving unit 104, configured to receive a first packet that is sent by the server device based on the status query packet, where the first packet includes the processing status of the request packet.

Optionally, the request packet includes a session identifier, and the session identifier is an identifier of a session established by the client device with the server device to send the request packet; and
the status query information includes the session identifier.

Optionally, the request packet includes a name of the data model, and the status query information includes the name of the data model.

Optionally, the apparatus further includes:
a starting unit, configured to start a timer when the first sending unit sends the request packet; and
the receiving unit is configured to: Before the timer expires, receive, by the client device, the first packet that is sent by the server device based on the status query packet.

Optionally, the first packet is a reply packet or a notification packet.

Optionally, the status query packet is a subscribe packet or an extended get packet, and the extended get packet is a get packet that carries the status query information.

Optionally, a uniform resource identifier of the status query packet includes the status query information.

Optionally, the second sending unit is configured to periodically send the status query packet to the server device.

Optionally, the request packet is a request packet based on the Restconf protocol.

FIG. 6 is a structural block diagram of another communications apparatus according to an embodiment of this application.

The communications apparatus provided in this embodiment of this application is applied to a server device, and specifically includes:
a processing unit 201, configured to obtain a request packet sent by a client device, and process the request packet, where the request packet is used to indicate the server device to operate data of a data model;
a receiving unit 202, configured to receive a status query packet sent by the client device, where the status query packet includes status query information, and the status query information is used to request the server device to obtain a processing status in which the server device processes the request packet;
an obtaining unit 203, configured to obtain the processing status of the request packet based on the status query information; and
a sending unit 204, configured to send a first packet to the client device, where the first packet includes the processing status of the request packet.

Optionally, the status query information includes a session identifier, and the session identifier is an identifier of a session established by the client device with the server device to send the request packet; and
the obtaining unit is configured to obtain, based on the session identifier included in the status query information, the processing status of the request packet corresponding to the session identifier.

Optionally, the status query information includes a name of the data model; and
the obtaining unit is configured to the processing status of the request packet including the name of the data model.

Optionally, the first packet includes a reply packet or a notification packet.

Optionally, the status query packet is a subscribe packet or an extended get packet, and the extended get packet is a get packet that carries the status query information.

Optionally, a uniform resource identifier of the status query packet includes the status query information.

Optionally, the sending unit is configured to periodically send the first packet to the client device.

Optionally, the request packet is a request packet based on the Restconf protocol.

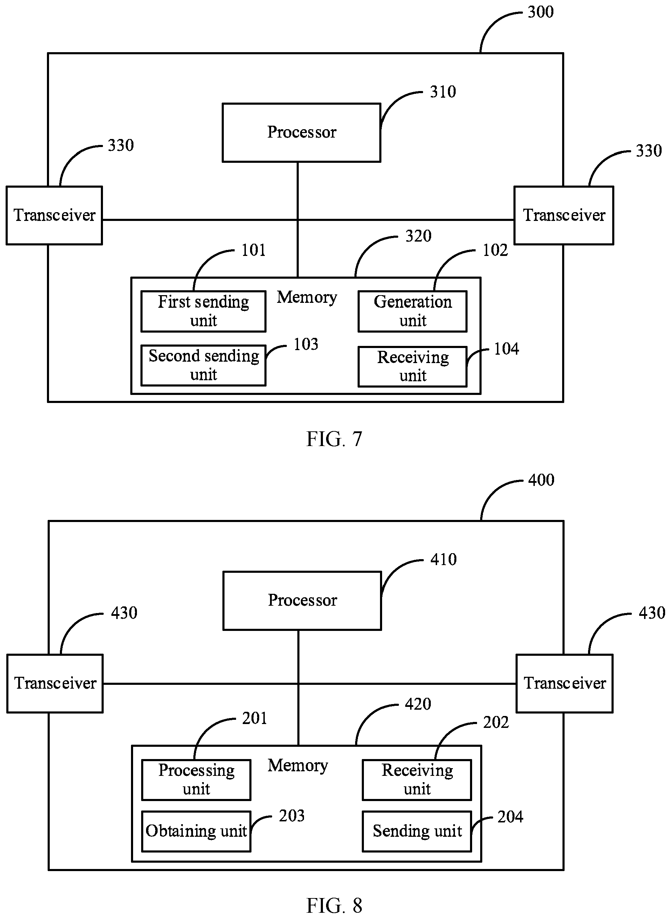

FIG. 7 is a schematic structural diagram of a client device 300 according to an embodiment of this application. The network device 300 may be applied to the architecture shown in FIG. 1, and may be, for example, the client device 10 in the network architecture shown in FIG. 1. The network device 300 is configured to perform an operation performed by the client device in the communication method in the embodiment shown in FIG. 2. As shown in FIG. 7, the client device 300 may include a processor 310, a memory 320 coupled to the processor 310, and a transceiver 330. The processor 310 may be a central processing unit (central processing unit, CPU), a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 310 may be one processor, or may include a plurality of processors. The memory 320 may include a volatile memory (volatile memory) such as a random access memory (random-access memory, RAM), or the memory may include a non-volatile memory (non-volatile memory) such as a read-only memory (read-only memory, ROM), a flash memory (flash memory), a hard disk drive (hard disk drive, HDD), or a solid-state drive (solid-state drive, SSD), or the memory may include a combination of the foregoing types of memories. The memory 320 may further include a combination of the foregoing types of the memories. The memory 320 may be one memory, or may include a plurality of memories. In an implementation, the memory 320 stores a computer-readable instruction, where the computer-readable instruction includes a plurality of software modules, for example, the first sending unit 101, the generation unit 102, the second sending unit 103, and the receiving unit 104. Specifically, the memory 320 stores program code used to implement functions of the first sending unit 101, the generation unit 102, the second sending unit 103, and the receiving unit 104. After executing each software module, the processor 310 may perform a corresponding operation according to an instruction of the software module. In this embodiment, an operation executed by a software module is actually an operation executed by the processor 310 according to an instruction of the software module. In addition, after executing the computer-readable instruction in the memory 320, the processor 310 may perform, according to an instruction of the computer-readable instruction, all operations that can be performed by the client device. For example, the client device performs an operation in the embodiment corresponding to FIG. 2.

FIG. 8 is a schematic diagram of a server device 400 according to this application. The server device 400 may be applied to the architecture shown in FIG. 1, and may be, for example, the server device 11 in the network architecture shown in FIG. 1. The server device 400 is configured to perform an operation performed by the server device in the communication method in the embodiment shown in FIG. 2. As shown in FIG. 8, the server device 400 may include a processor 410, a memory 420 coupled to the processor 410, and a transceiver 430. The processor 410 may be a central processing unit (central processing unit, CPU), a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 410 may be one processor, or may include a plurality of processors. The memory 420 may include a volatile memory (volatile memory) such as a random access memory (random-access memory, RAM), or the memory may include a non-volatile memory (non-volatile memory) such as a read-only memory (read-only memory, ROM), a flash memory (flash memory), a hard disk drive (hard disk drive, HDD), or a solid-state drive (solid-state drive, SSD), or the memory may include a combination of the foregoing types of memories. The memory 420 may further include a combination of the foregoing types of the memories. The memory 420 may be one memory, or may include a plurality of memories. In an implementation, the memory 420 stores a computer-readable instruction, where the computer-readable instruction includes a plurality of software modules such as the processing unit 201, the receiving unit 202, the obtaining unit 203, and the sending unit 204. Specifically, the memory 420 stores program code used to implement functions of the processing unit 201, the receiving unit 202, the obtaining unit 203, and the sending unit 204. After executing each software module, the processor 410 may perform a corresponding operation according to an instruction of the software module. In this embodiment, an operation executed by a software module is actually an operation executed by the processor 410 according to an instruction of the software module. In addition, after executing the computer-readable instruction in the memory 420, the processor 410 may perform, according to an instruction of the computer-readable instruction, all operations that can be performed by the server device. For example, the server device performs an operation in the embodiment corresponding to FIG. 2.

An embodiment of this application further provides a communications system, including the client device 300 in the embodiment corresponding to FIG. 7 and the server device 400 in the embodiment corresponding to FIG. 8, and configured to perform the method in the embodiment corresponding to FIG. 2.

An embodiment of this application further provides a computer-readable storage medium, including an instruction. When the instruction is run on a computer, the computer is enabled to perform the foregoing communication method.

In the specification, the claims, and the accompanying drawings of this application, the terms "first", "second", "third", "fourth", and the like (if existent) are intended to distinguish between similar objects but do not necessarily indicate a particular order or sequence. It should be understood that data termed in such a way are interchangeable in proper circumstances so that the embodiments described herein can be implemented in other orders than the order illustrated or described herein. Moreover, the terms "include", "have" and any other variants mean to cover the non-exclusive inclusion, for example, a process, a method, a system, a product, or a device that includes a list of steps or units is not necessarily limited to those steps or units, but may include other steps or units not expressly listed or inherent to such a process, method, product, or device.

It may be clearly understood by persons skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed to a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for enabling a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another place. The storage medium may be any available medium accessible to a general-purpose or special-purpose computer.

The objectives, the technical solutions, and the beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without making the essence of the corresponding technical solutions depart from the scope of the technical solutions of the embodiments of this application.

## Claims

1. A communication method, comprising:
generating, by a client device, a request packet and sending the request packet to a server device, wherein the request packet is used to indicate the server device to operate data of a data model;
generating, by the client device, a status query packet based on the request packet, wherein the status query packet comprises status query information, and the status query information is used to request the server device to obtain a processing status in which the server device processes the request packet;
sending, by the client device, the status query packet to the server device; and
receiving, by the client device, a first packet that is sent by the server device based on the status query packet, wherein the first packet comprises the processing status of the request packet.

2. The method according to claim 1, wherein the request packet comprises a session identifier, and the session identifier is an identifier of a session established by the client device with the server device to send the request packet; and
the status query information comprises the session identifier.

3. The method according to claim 1, wherein the request packet comprises a name of the data model, and the status query information comprises the name of the data model.

4. The method according to any one of claims 1 to 3, wherein when the client device sends the request packet to the server device, the method further comprises:
starting a timer; and
the receiving, by the client device, a first packet that is sent by the server device based on the status query packet comprises:
before the timer expires, receiving, by the client device, the first packet that is sent by the server device based on the status query packet.

5. The method according to any one of claims 1 to 4, wherein the first packet is a reply packet or a notification packet.

6. The method according to any one of claims 1 to 5, wherein the status query packet is a subscribe packet or an extended get packet, and the extended get packet is a get packet that carries the status query information.

7. The method according to any one of claims 1 to 6, wherein a uniform resource identifier of the status query packet comprises the status query information.

8. The method according to any one of claims 1 to 7, wherein the sending, by the client device, the status query packet to the server device comprises:
periodically sending, by the client device, the status query packet to the server device.

9. The method according to any one of claims 1 to 8, wherein the request packet is a request packet based on the Restconf protocol.

10. A communication method, comprising:
obtaining, by a server device, a request packet sent by a client device, and processing the request packet, wherein the request packet is used to indicate the server device to operate data of a data model;
receiving, by the server device, a status query packet sent by the client device, wherein the status query packet comprises status query information, and the status query information is used to request the server device to obtain a processing status in which the server device processes the request packet;
obtaining, by the server device based on the status query information, the processing status of the request packet; and
sending, by the server device, a first packet to the client device, wherein the first packet comprises the processing status of the request packet.

11. The method according to claim 10, wherein the status query information comprises a session identifier, and the session identifier is an identifier of a session established by the client device with the server device to send the request packet; and
the obtaining, by the server device based on the status query information, the processing status of the request packet comprises:
obtaining, by the server device based on the session identifier comprised in the status query information, the processing status of the request packet corresponding to the session identifier.

12. The method according to claim 10, wherein the status query information comprises a name of the data model; and
the obtaining, by the server device based on the status query information, the processing status of the request packet comprises:
obtaining, by the server device, the processing status of the request packet comprising the name of the data model.

13. The method according to any one of claims 10 to 12, wherein the first packet is a reply packet or a notification packet.

14. The method according to any one of claims 10 to 13, wherein the status query packet is a subscribe packet or an extended get packet, and the extended get packet is a get packet that carries the status query information.

15. The method according to any one of claims 10 to 14, wherein a uniform resource identifier of the status query packet comprises the status query information.

16. The method according to any one of claims 10 to 15, wherein the sending, by the server device, a first packet to the client device comprises:
periodically sending, by the server device, the first packet to the client device.

17. The method according to any one of claims 10 to 16, wherein the request packet is a request packet based on the Restconf protocol.

18. A client device, comprising:
a memory; and
a processor connected to the memory, wherein the processor is configured to execute a computer-readable instruction in the memory, so that the client device performs the following operations:
generating a request packet and sending the request packet to a server device, wherein the request packet is used to indicate the server device to operate data of a data model;
generating a status query packet based on the request packet, wherein the status query packet comprises status query information, and the status query information is used to request the server device to obtain a processing status in which the server device processes the request packet;
sending the status query packet to the server device; and
receiving a first packet that is sent by the server device based on the status query packet, wherein the first packet comprises the processing status of the request packet.

19. The device according to claim 18, wherein the request packet comprises a session identifier, and the session identifier is an identifier of a session established by the processor with the server device to send the request packet; and
the status query information comprises the session identifier.

20. The device according to claim 18, wherein the request packet comprises a name of the data model, and the status query information comprises the name of the data model.

21. The device according to any one of claims 18 to 20, wherein when sending the request packet to the server device, the processor is further configured to execute the computer-readable instruction in the memory, so that the client device performs the following operation:
starting a timer; and
that the processor receives the first packet that is sent by the server device based on the status query packet comprises:
before the timer expires, receiving the first packet that is sent by the server device based on the status query packet.

22. The device according to any one of claims 18 to 21, wherein the first packet is a reply packet or a notification packet.

23. The device according to any one of claims 18 to 22, wherein the status query packet is a subscribe packet or an extended get packet, and the extended get packet is a get packet that carries the status query information.

24. The device according to any one of claims 18 to 23, wherein a uniform resource identifier of the status query packet comprises the status query information.

25. The device according to any one of claims 18 to 24, wherein that the processor sends the status query packet to the server device comprises:
periodically sending the status query packet to the server device.

26. The device according to any one of claims 18 to 25, wherein the request packet is a request packet based on the Restconf protocol.

27. A server device, comprising:
a memory; and
a processor connected to the memory, wherein the processor is configured to execute a computer-readable instruction in the memory, so that the server device performs the following operations:
obtaining a request packet sent by a client device, and processing the request packet, wherein the request packet is used to indicate the server device to operate data of a data model;
receiving a status query packet sent by the client device, wherein the status query packet comprises status query information, and the status query information is used to request the processor to obtain a processing status in which the processor processes the request packet;
obtaining, based on the status query information, the processing status of the request packet; and
sending a first packet to the client device, wherein the first packet comprises the processing status of the request packet.

28. The device according to claim 27, wherein the status query information comprises a session identifier, and the session identifier is an identifier of a session established by the processor with the server device to send the request packet; and
that the processor obtains, based on the status query information, the processing status of the request packet comprises:
obtaining, based on the session identifier comprised in the status query information, the processing status of the request packet corresponding to the session identifier.

29. The device according to claim 27, wherein the status query information comprises a name of the data model; and
that the processor obtains, based on the status query information, the processing status of the request packet comprises:
obtaining the processing status of the request packet comprising the name of the data model.

30. The device according to any one of claims 27 to 29, wherein the first packet is a reply packet or a notification packet.

31. The device according to any one of claims 27 to 30, wherein the status query packet is a subscribe packet or an extended get packet, and the extended get packet is a get packet that carries the status query information.

32. The device according to any one of claims 27 to 31, wherein a uniform resource identifier of the status query packet comprises the status query information.

33. The device according to any one of claims 27 to 32, wherein that the processor sends the first packet to the client device comprises:
periodically sending the first packet to the client device.

34. The device according to any one of claims 27 to 33, wherein the request packet is a request packet based on the Restconf protocol.
